# EUROPÄISCHE PATENTSCHRIFT

(11) **EP 0 438 788 B1**
(45) Veröffentlichungstag und Bekanntmachung des Hinweises auf die Patenterteilung: **02.11.1994**
(21) Anmeldenummer: 90125568.7
(22) Anmeldetag: 27.12.1990
(51) Int. Cl.: B65G 47/90, B65G 47/14

(54) **Vorrichtung zum Vereinzeln von flexiblen Gegenständen, insbesondere von Kleinteilen**
Separating device for flexible articles, in particular small parts
Dispositif destiné à séparer des articles flexibles, en particulier des petites pièces

(30) Priorität: 26.01.1990 DE 4002313
(43) Veröffentlichungstag der Anmeldung: 31.07.1991
(73) Patentinhaber: ZORN GmbH & CO. KG, D-78333 Stockach (DE)
(72) Erfinder: Hasselkus, Hans, Dipl.-Ing. (FH), D-78333 Stockach (DE); Hoffmann, Frank, D-78333 Stockach (DE); Güttinger, Hanspeter, Dipl.-Ing. (FH), D-78253 Eigeltingen (DE)
(74) Vertreter: Hiebsch, Gerhard F., Dipl.-Ing.

(56) Entgegenhaltungen:
- EP-A- 0 102 575
- EP-A- 0 171 851
- DE-C- 512 417
- DE-U- 9 001 800
- US-A- 2 070 165

## Beschreibung

Die Erfindung betrifft eine Vorrichtung zum Vereinzeln von flexiblen Gegenständen nach dem Oberbegriff des Patentanspruches 1.

Bei einer solchen Vorrichtung werden nach DE-PS 512 417 Wendelleuchtkörper vereinzelt, die für Maschinen zur selbsttätigen Festlegung der Wendelleuchtkörper an den Traggestellen der Lampen Anwendung finden sollen. Diese Wendelleuchtkörper sollen damit an die entsprechenden Verarbeitungsstätten nicht mehr einzeln von Hand sondern maschinell herangeführt werden.

Entsprechend dem Alter dieser Patentschrift erfolgt das Absenken und horizontale Verfahren der Greifereinheit mit ihrem Greifer dadurch, daß das gesamte dortige Traggestell, das eine Art Galgen für den Greifer bildet, mittels daumenartiger Nockenscheiben horizontal und vertikal verfahren wird.

An sich ist außerdem der EP-A-0 171 851 bei einer Vorrichtung zum Vereinzeln von Stangenteilen, die einer Werkzeugmaschine zugeführt werden sollen, zu entnehmen, die Greifereinheit in beschränktem Maße anzuheben bzw. abzusenken, um aus einer Gruppe erfaßter Einzelstangen eine einzige Stange herauszufassen. Schließlich zeigt EP-A-0 102 575 eine pneumatische Steuerung der Relativbewegungen der Greifereinheit durch etwa vertikale und horizontale Pneumatikzylinder.

In Kenntnis dieses Standes der Technik hat sich der Erfinder das Ziel gesetzt, die verhältnismäßig schwerfällige Anordnung nach dieser Schrift zu verbessern und zu modernisieren und eine schnellere, effektivere und zuverlässigere Vereinzelung zu gewährleisten.

Zur Lösung dieser Aufgabe führt das Merkmal des Kennzeichens des Anspruches 1, wobei besondere Weiterbildungen dieses Anspruches 1 in den Unteransprüchen 2 bis 4 angegeben sind.

Der bevorzugte Aufbau der Vorrichtung nach der Erfindung umfaßt den volumenveränderbaren und schwingenden Vorratsbehälter mit Drehstromantrieb, zwei pneumatische Vertikal-Lineareinheiten mit je einem besonders ausgebildetem Greifer für die Schlauchabschnitte od. dgl. flexiblen Strängen sowie pneumatisch betätigten Abstreifern, dazu eine pneumatische Horizontal-Lineareinheit und als Fördermittel bevorzugt eine Doppel-V-Schiene.

Die sensorische Erfassung der Schlauchabschnitte in den Spezialgreifern und eine spezielle Software der SPS sichert beschädigungsfreie/n Vereinzelung und Transport der Schlauchabschnitte od. dgl. bzw. der Kabel.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Seitenansicht einer erfindungsgemäßen Vorrichtung zum Vereinzeln von flexiblen Gegenständen sowie Schlauchabschnitten;
- Fig. 2:: die Frontansicht zu Fig. 1;
- Fig. 3:: einen vergrößerten Ausschnitt der Fig. 2 mit einer Greifeinheit;
- Fig. 4:: eine vergrößerte Greifeinheit in Frontansicht;
- Fig. 5:: eine Seitenansicht zu Fig. 4;
- Fig. 6:: eine Seitenansicht einer anderen Greifeinrichtung;
- Fig. 7:: die Frontansicht zu Fig. 6.

Auf einer Grundplatte 10 ist ein Drehstromantrieb 12 festgelegt sowie neben diesem ein Vorratsbehälter 14 in einem Sockelgestell 16 schwingbar aufgehängt. Im Vorratsbehälter 14 lagern beispielsweise -- aus Gründen der Übersichtlichkeit nicht dargestellte -- Schlauchabschnitte kleineren Durchmessers von etwa 5 mm für den Einsatz in der Automobilindustrie, der Medizintechnik od.dgl.

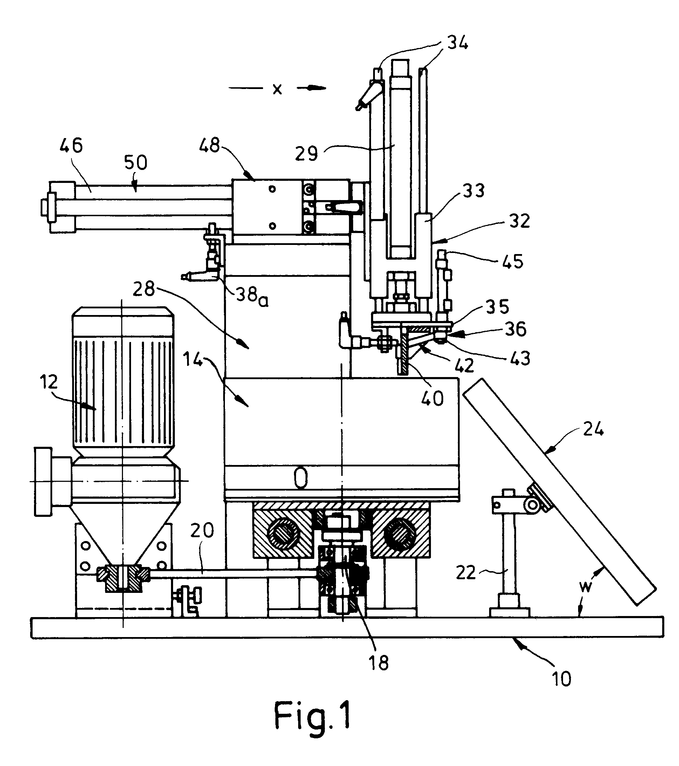

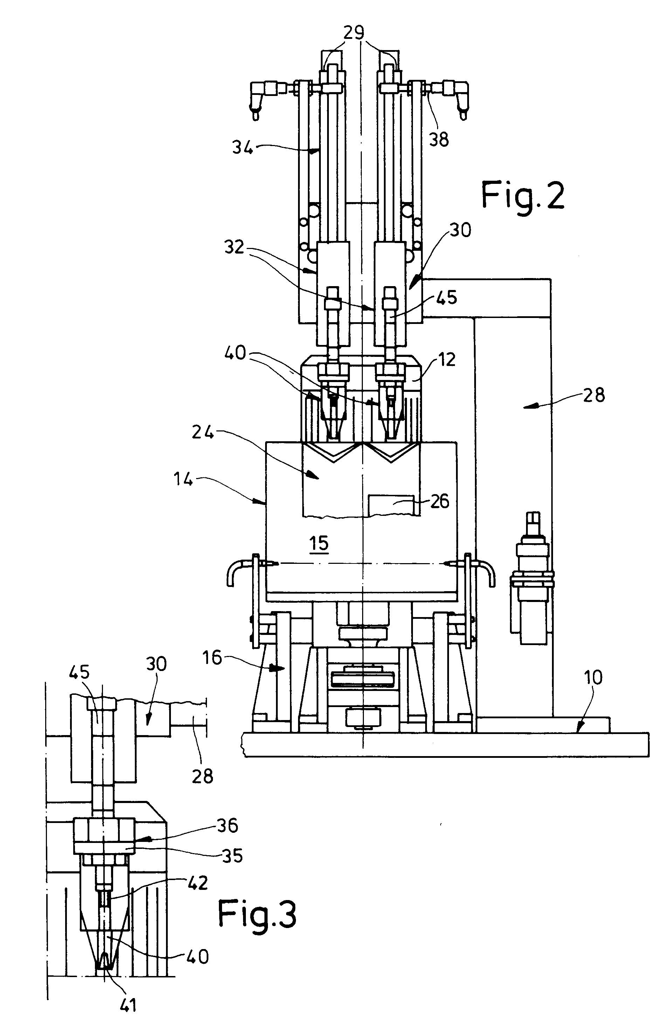

Der Antrieb 12 ist mit einem Schwingungserreger 18 des Vorratsbehälters 14 durch einen umlaufenden Treibstrang 20 verbunden. In Fig. 1 sind rechts neben dem Vorratsbehälter 14 auf einem Ständer 22 zwei Förderrinnen 24 V-förmigen Querschnittes in einem bestimmbaren Winkel w neigbar festgelegt, und deren obere Enden dem Vorratsbehälter 14 bzw. dessen Frontwand 15 benachbart. Diese Förderrinnen 24 weisen gemäß Fig. 2 Ausnehmungen 26 auf.

Oberhalb des Vorratsbehälters 14 befindet sich an einem Galgen 28 ein zwei Pneumatikzylinder 29 aufweisendes Traggestell 30, von dem in Abstand e voneinander parallel gerichtete Führungsgehäuse 32 abragen, die gemäß Fig. 1 in Seitenansicht H-förmig sind. Deren Vertikalarme 33 sind jeweils von einem Hubstab 34 für Tragplatten 35 durchsetzt; an jedem Führungsgehäuse 32 ist so eine der Tragplatten 35 vertikal linear bewegbar und mit ihr eine daran festliegende Greifereinheit 36. Die Bewegung der Greifereinheiten 36 wird mittels Druckluft ausgeführt sowie durch Sensoren 38, 38ₐ gesteuert.

Jede der beiden Greifereinheiten 36 ist mit einem bei 40 angedeuteten Greifer sowie einer ihm zugeordneten pneumatisch betätigten Abstreifeinrichtung 42 ausgestattet. Jeder aus einem Greifergehäuse 39 ragende Greifer 40 ist wie eine zweizinkige Gabel mit einem sich nach oben verjüngenden Greifraum 41 ausgestaltet, der einen ertasteten Schlauchabschnitt klemmend aufzunehmen vermag. Ein in Fig. 1 nicht erkennbarer Fühler meldet die erfolgte Aufnahme eines Schlauchabschnittes und löst einen Hubvorgang aus.

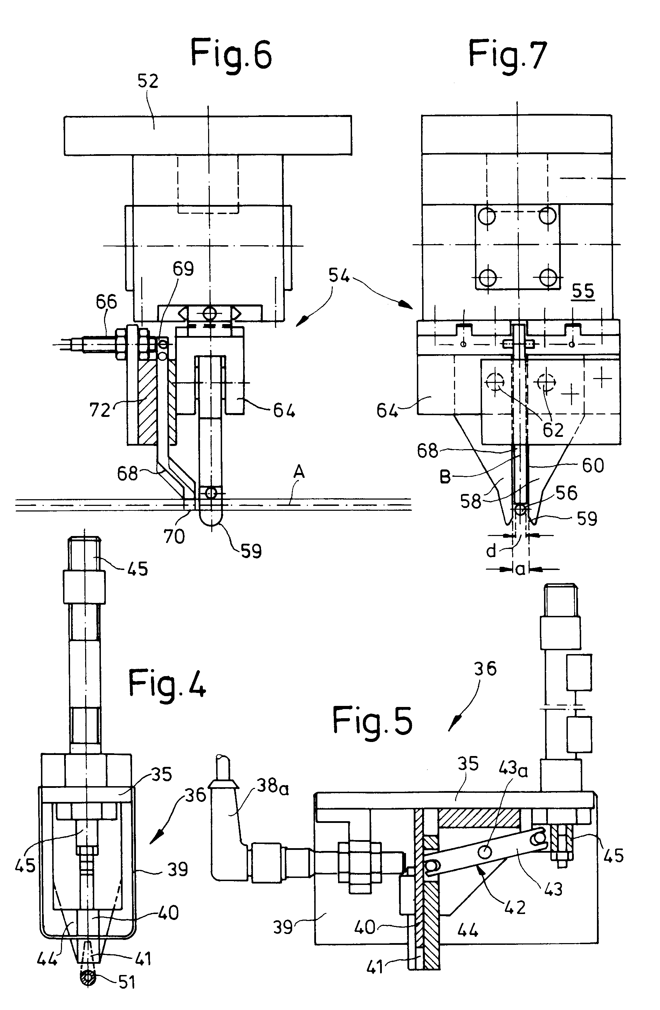

Die Abstreifeinrichtung 42 besteht aus einem bei 43ₐ angelenkten Hebel 43, der einends an einen Betätigungszylinder 45 angeschlossen ist und von diesem pneumatisch in die in Fig. 5 wiedergegebene Druckstellung geführt wird; in dieser drückt der freie Hebelarm des Hebels 43 mittels eines vertikalen Schiebers 44 auf einen eingeklemmten, bei 51 angedeuteten Schlauchabschnitt und führt diesen aus jenem sich abwärts konisch erweiternden Greifraum 41.

Insbesondere Fig. 1 macht deutlich, daß jenes Traggestell 30 am Galgen 28 mittels Horizontalarmen 46 aus der dargestellten Startposition in Pfeilrichtung x führbar ist. Diese Horizontalarme 46 lagern in einem Gehäuse 48 und sind mit einem Pneumatikzylinder 50 in Wirkverbindung, an dem sie horizontal entlang geführt werden können. Auf diese Weise sind die Greifereinheiten 36 sowohl über dem Vorratsbehälter 14 verfahrbar als auch zu den Förderrinnen 24 hin.

Die Greifereinheiten 36 werden mit den Greifern 40 in den schwingenden Vorratsbehälter 14 abgesenkt. Sobald die bereits erwähnten Sensoren in den Greifern 40 darin angekommene Schlauchabschnitte erkannt haben, gehen die Greifereinheiten 36 aufwärts in ihre Grundstellungen bzw. in die Startposition zurück. Beide Greifereinheiten 36 arbeiten unabhängig voneinander, so daß bei einem Schlauchverlust in einem der Greifer 40 der beschriebene Vorgang wiederholt wird.

Haben zwei Schlauchabschnitte die Startposition über dem Vorratsbehälter 14 erreicht, werden die Horizontalarme 46 eingeschaltet, und die Greifereinheiten 36 fahren in Pfeilrichtung x über die Förderrinnen 24. Dort werden die Schlauchabschnitte durch die beschriebenen Abstreifeinrichtungen 42 aus den Greifern 40 ausgetragen und gelangen in die ihnen zugeordneten Förderrinnen 24 an einen justierbaren, in der Zeichnung vernachlässigten Anschlag.

Die so reproduzierbar vereinzelten Schlauchabschnitte gleiten in den Förderrinnen 24 V-förmigen Querschnittes abwärts und können daraus durch zugeordnetes Handhabungsgerät zur Weiterverarbeitung entnommen werden, wobei die bei 26 angedeuteten Ausnehmungen den Zugriff erleichtern. Die Ausgabe -- Taktzeit für zwei Schlauchabschnitte gleichzeitig -- beträgt maximal vier Sekunden.

Die sensorische Erfassung der Schlauchabschnitte in den Spezialgreifern 40 gewährleistet im Zusammenhang mit einer SPS-Steuerung ein beschädigungsfreies Vereinzeln sowie einen problemlosen Transport dieser Schlauchabschnitte.

Das Schwingvolumen des schwingbaren Vorratsbehälters 14 der etwa 600 mm bis 800 mm hohen Vorrichtung beträgt beispielsweise bei Verarbeitung von Schlauchabschnitten des Durchmessers 5 mm etwa 1100 Teile, wobei die Vorrichtung Schlauchabschnitte von 100 bis 300 mm Länge verarbeitet; der Vorratsbehälter 14 ist entsprechend verstellbar. Das minimale Füllvolumen des Vorratsbehälters 14 wird mittels optischer Sensoren überwacht, seine Schwingfrequenz ist je nach verwendeten Durchmessern der Schlauchbabschnitte einstellbar.

Die Figuren 4, 5 geben eine -- mittels einer Adapterplatte 52 in der Vorrichtung der Fig. 1, 2 festlegbare -- Greifereinheit oder Greifeinrichtung 54 für das Aufnehmen von Kabeln 56 aus dem Vorratsbehälter 14 wieder.

Von der Greifeinrichtung 54 ragen zwei Greiferbacken 58 mit innen angefasten sowie in Seitenansicht gerundeten Enden 59 nach unten, die miteinander ein Greifermaul 60 begrenzen. Dessen Weite a ist in der gezeigten Ruhelage größer als der Durchmesser d des Kabels 56, dessen Achse in Fig. 4 mit A bezeichnet ist.

Die beiden Greiferbacken 58 sind bei 62 in einer querschnittlich U-förmigen Halteschiene 64 angelenkt und dank eines in der Zeichnung nicht dargestellten Lenkersystems relativ zueinander bewegbar. Das Lenkersystem und sein bevorzugt pneumatischer -- gegebenenfalls aber auch hydraulischer oder elektrischer -- Antrieb sind in einem Gehäuse 55 untergebracht.

Zur Steuerung der Greiferbacken 58 ist einem Sensor 66 ein vor diesem verschiebbarer Kontrolltaster 68 zugeordnet; dieser hängt in Ruhelage der Vorrichtung 54 abwärts -- in Fig. 4 bei 70 gestrichelt angedeuteten -- und wird von einem ertasteten Kabel 56 in die ausgezogen gezeichnete obere Taststellung angehoben, wobei das obere Tasterende 69 in den Strahlbereich des Sensors 66 gelangt und ein sanftes Schließen des Greifermauls 60 auslöst. Der Kontrolltaster 68 ist dazu vertikal in einem Tragkörper 72 des Sensors 66 geführt.

## Patentansprüche

1. Vorrichtung zum Vereinzeln von flexiblen Gegenständen (51), insbesondere Kleinteilen, mit einem diese aufnehmenden Behälter (14) sowie einer in ihn absenkbaren und horizontal verfahrbaren Greifereinheit (36,54) mit zumindest einem Greifer (40,58), wobei in die horizontale Bewegungsbahn der/des Greifer/s rinnenartige Förderelemente (24) als Austragseinrichtung einragen, und wobei die Greifereinheit (36,54) an einem horizontal verfahrbaren Traggestell (30) angeordnet und am Traggestell (30) selbst dadurch anhebbar und absenkbar angeordnet ist, daß das Traggestell (30) eine vertikal verfahrbare Tragplatte (35) aufweist, die mit einem Hubgestänge (34) verbunden ist, das in einem Führungsgehäuse (32) senkrecht verfahrbar lagert,
dadurch gekennzeichnet,
daß dem Greifer (40) der Greifereinheit (36) ein pneumatisch bewegbarer Abstreifer (42) zugeordnet ist.

2. Vorrichtung nach Anspruch 1, dadurch gekennzeichnet, daß das Hubgestänge (34) an in Hubrichtung eines etwa H-förmigen Führungsgehäuses (32) verlaufenden Vertikalarmen (33) geführt ist.

3. Vorrichtung nach einem der Ansprüche 1 oder 2, dadurch gekennzeichnet, daß das Traggestell (30) an wenigstens einem horizontal verfahrbaren Tragarm (46) eines Galgens (28) angeordnet ist und die Relativbewegung zwischen dem Traggestell (30) und der Greifereinheit (36,54) pneumatisch steuerbar ist.

4. Vorrichtung nach Anspruch 3, dadurch gekennzeichnet, daß etwa vertikale (50) und etwa horizontale Pneumatikzylinder (29) vorgesehen sind, wobei der vertikale Pneumatikzylinder (50) mit dem Hubgestänge (34) und der horizontale Pneumatikzylinder (29) mit dem horizontal verfahrbaren Tragarm (46) zusammenwirkt.

5. Vorrichtung nach einem der Ansprüche 1 bis 4, dadurch gekennzeichnet, daß der Abstreifer (42) einen Hebel (43) aufweist, der einends an einen pneumatischen Betätigungszylinder (45) angeschlossen ist und andernends in den Greifraum (41) ragt.

6. Vorrichtung nach Anspruch 5, dadurch gekennzeichnet, daß der Hebel (43) beidseits einer Anlenkstelle (43a) Hebelarme aufweist, deren einer mit dem Betätigungszylinder (45) und deren anderer mit einem dem Greifer (40) und dessen Greifraum (41) zugeordneten Schieber (44) verbunden ist.

7. Vorrichtung nach einem der Ansprüche 1 bis 6, dadurch gekennzeichnet, daß dem Greifermaul (60) wenigstens ein Tastelement (68) zugeordnet und dieses am Greifermaul heb- und senkbar ist, um eine Schließbewegung des Greifermauls (60) auszulösen.

8. Vorrichtung nach Anspruch 7, dadurch gekennzeichnet, daß das Tastelement (68) in angehobener Stellung in den Strahlbereich eines Sensors (66) einragt, mit dem die Schließbewegung des Greifermauls (60) auslösbar ist.

9. Vorrichtung nach einem der Ansprüche 1 bis 8, dadurch gekennzeichnet, daß der Behälter (14) schwingbar aufgehängt und mit einem Antrieb (12) verbunden ist, und daß die Förderelemente (24) einer Wand (15) des Behälters (14) neigbar (Winkel w) zugeordnet sind, wobei die rinnenartigen Förderelemente (24) etwa V-förmigen Querschnitts mit Ausnehmungen (26) versehen sind.

## Claims

1. Separating device for flexible articles (51), in particular small parts, comprising a container (14) receiving these small parts and a horizontally movable gripper unit (36, 54) with at least one gripper (40, 58) which can be lowered into the container, channel-type conveying elements (24) projecting as a discharge means into the horizontal path of motion of the gripper/s, and the gripper unit (36, 54) being arranged on a horizontally movable supporting frame (30) and being arranged so that it can be raised and lowered on the supporting frame (30) itself in that the supporting frame (30) has a vertically movable supporting plate (35) which is connected to a lifting gear (34) which is mounted in a vertically movable manner in a guide housing (32), characterised in that a pneumatically movable stripper (42) is associated with the gripper (40) of the gripper unit (36).

2. Device according to claim 1, characterised in that the lifting gear (34) is guided on vertical arms (33) extending in the lifting direction of a substantially H-shaped guide housing (32).

3. Device according to either of claims 1 or 2, characterised in that the supporting frame (30) is arranged on at least one horizontally movable supporting arm (46) of a bracket (28) and the relative movement between the supporting frame (30) and the gripper unit (36, 54) can be pneumatically controlled.

4. Device according to claim 3, characterised in that substantially vertical (50) and substantially horizontal pneumatic cylinders (29) are provided, the vertical pneumatic cylinder (50) cooperating with the lifting gear (34) and the horizontal pneumatic cylinder (29) cooperating with the horizontally movable supporting arm (46).

5. Device according to one of claims 1 to 4, characterised in that the stripper (42) has a lever (43) which is connected at one end to a pneumatic actuating cylinder (45) and at the other end projects into the gripping space (41).

6. Device according to claim 5, characterised in that the lever (43) has lever arms on both sides of a hinge point (43a), one of which is connected to the actuating cylinder (45) and the other of which is connected to a slide (44) associated with the gripper (40) and its gripping space (41).

7. Device according to one of claims 1 to 6, characterised in that at least one sensing element (68) is associated with the gripper mouth (60) and can be raised and lowered on the gripper mouth in order to initiate a closing movement of the gripper mouth (60).

8. Device according to claim 7, characterised in that the sensing element (68) projects in the raised position into the beam area of a sensor (66) by means of which the closing movement of the gripper mouth (60) can be initiated.

9. Device according to one of claims 1 to 8, characterised in that the container (14) is mounted in an oscillating manner and is connected to a drive (12), and that the conveying elements (24) can be inclined (angle w) relative to a wall (15) of the container (14), the channel-type conveying elements (24) with a substantially V-shaped cross section being provided with recesses (26).

## Revendications

1. Dispositif pour individualiser des objets flexibles (51), en particulier des petites pièces, comportant un bac (14) recueillant ces objets, ainsi qu'une unité de préhension (36, 54) se déplaçant horizontalement et pouvant être abaissée dans le bac, et comportant au moins une pince (40, 58), dans lequel des éléments de transport (24), en forme de gouttière, qui servent de dispositif d'évacuation, s'engagent sur la trajectoire de la (des) pince(s), et dans lequel l'unité de préhension (36, 54) est montée sur un bâti porteur (30) mobile dans la direction horizontale et est montée sur le bâti porteur (30) lui-même, de façon à pouvoir être relevée et abaissée, par le fait que le bâti porteur (30) présente un plateau support (35), mobile en direction verticale, qui est relié à une tige élévatrice (34) laquelle est montée mobile dans la direction verticale dans un carter de guidage (32),
caractérisé en ce que
un racleur (42) à commande pneumatique est associé à la pince (40) de l'unité de préhension (36).

2. Dispositif selon la revendication 1, caractérisé en ce que la tige élévatrice (34) est guidée le long de bras verticaux (33) s'étendant dans la direction de levage d'un carter de guidage (32) sensiblement en forme de H.

3. Dispositif selon l'une des revendications 1 ou 2, caractérisé en ce que le bâti porteur (30) est fixé à au moins un bras support (46), mobile horizontalement, d'une potence (28), et le mouvement relatif entre le bâti porteur (30) et l'unité de préhension (36, 54) peut être commandé pneumatiquement.

4. Dispositif selon la revendication 3, caractérisé en ce que, un vérin pneumatique (50) sensiblement vertical et un vérin pneumatique (29) sensiblement horizontal sont prévus, dans lequel le vérin pneumatique vertical (50) coopère avec la tige élévatrice (34) et le vérin pneumatique horizontal (29) coopère avec le bras support (46) mobile horizontalement.

5. Dispositif selon l'une des revendications 1 à 4, caractérisé en ce que le racleur (42) présente un levier (43) qui, à une extrémité, est relié à un vérin de commande pneumatique (45) et, à son autre extrémité, s'engage dans l'espace de préhension (41).

6. Dispositif selon la revendication 5, caractérisé en ce que le levier (43) présente, des deux côtés d'un point d'articulation (43a), des bras de levier dont l'un est relié au vérin de commande (45) et l'autre est relié à un coulisseau (44) associé à la pince (40) et à l'espace de préhension (41) de celle-ci.

7. Dispositif selon l'une des revendications 1 à 6, caractérisé en ce que, au moins un élément palpeur (68) est associé à la bouche (60) de la pince et en ce que cet élément palpeur peut monter et descendre au niveau de la bouche de cette pince pour déclencher un mouvement de fermeture de la bouche (60) de la pince.

8. Dispositif selon la revendication 7, caractérisé en ce que l'élément palpeur (68), en position relevée, s'engage dans la zone de rayonnement d'un capteur (66) avec lequel le mouvement de fermeture de la bouche (60) de la pince peut être déclenché.

9. Dispositif selon l'une des revendications 1 à 8, caractérisé en ce que le bac (14) est suspendu de façon à pouvoir osciller et est relié à un entraînement (12), et en ce que les éléments de transport (24) sont associés à une paroi (15) du bac (14) de manière inclinable (angle w), les éléments de transport (24), en forme de gouttière à section transversale sensiblement en V, étant pourvus d'évidements (26).
